# EUROPEAN PATENT SPECIFICATION

(11) **EP 2 515 719 B1**
(45) Date of publication and mention of the grant of the patent: **02.07.2014**
(21) Application number: 10807632.4
(22) Date of filing: 20.12.2010
(51) Int. Cl.: A47G 1/20, B25H 7/04, B23B 49/02

(54) **A MARKER DEVICE**
MARKIERUNGSVORRICHTUNG
DISPOSITIF DE MARQUAGE

(30) Priority: 24.12.2009 GB 0922556
(43) Date of publication of application: 31.10.2012
(73) Proprietor: Fixeeze Ltd, Cheshunt, Hertfordshire EN8 0NL (GB)
(72) Inventor: LACK, Daniel, Cheshunt Hertfordshire EN8 0NL (GB)
(74) Representative: Fry, David John
(86) International application number: PCT/GB2010/002297
(87) International publication number: WO 2011/077076

(56) References cited:
- BE-A6- 1 007 784
- DE-A1- 4 303 318
- US-A1- 2007 119 068
- US-B1- 7 350 312

## Description

The present invention relates to a marker device. More especially, the invention relates to device that marks the position for a hole to be drilled in to a wall in order, for example, to hang an article.

There are numerous difficulties associated with the hanging of large articles on a wall, particularly unaided. One major problem is knowing precisely where holes need to be drilled for the article to be held in the desired position. A lengthy procedure is often required involving drawing, measuring and marking templates to establish the drill points. For bigger items, two people are required for holding the item in the desired position and aligning a template to the wall.

The present invention seeks to overcome the aforementioned problems with traditional hanging methods by providing a disposable indicator for use with fixing plates and which replaces the need to produce templates and measure distances between screws. Moreover, the apparatus can provide an effective way of hanging an article without the need for a second person.

According to one aspect there is provided a marker device having a central aperture and first and second sides carrying an adhesive, the first side carrying more, or stronger, adhesive than the second, the marker including means to facilitate removal, of the marker from a wall to which the first side is attached during use, the marker including at least one concentric line of weakness extending around the aperture, which line can be broken to increase the size of the aperture of the marker.

Preferably the marker is disc-shaped.

Preferably the removal means comprises a line of weakness extending radially from the aperture to the outer edge of the marker.

Alternatively the removal means comprises a tab protruding from the edge of the marker which can be gripped by the user to pull the marker apart.

Preferably the marker has at three concentric lines of weakness of different radii to allow a variation of sizes of aperture.

Preferably, the first side of the marker has a layer of gauze or gauze-like material extending across the aperture.

Embodiment of the invention will now be described with reference to the accompanying figures in which :
Figure 1 is a schematic illustration of a first embodiment not part of the invention of a marker device;
Figures 2(a) - (c) are schematic illustrations of a second embodiment not part of the invention of a marker device;
Figures 3(a) - (c) are schematic illustrations of a third embodiment not part of the invention of a marker device;
Figures 4(a) - (c) are schematic illustrations of an embodiment of a marker device constructed in accordance with the present invention;
Figure 5 is a schematic illustration of a gauze layer for use with any one of the above embodiments;
Figure 6 illustrates the gauze layer of Figure 5 used in combination with the embodiment of figure 1; and
Figures 7(a) - (f) are schematic illustrations showing how the marker device is used.

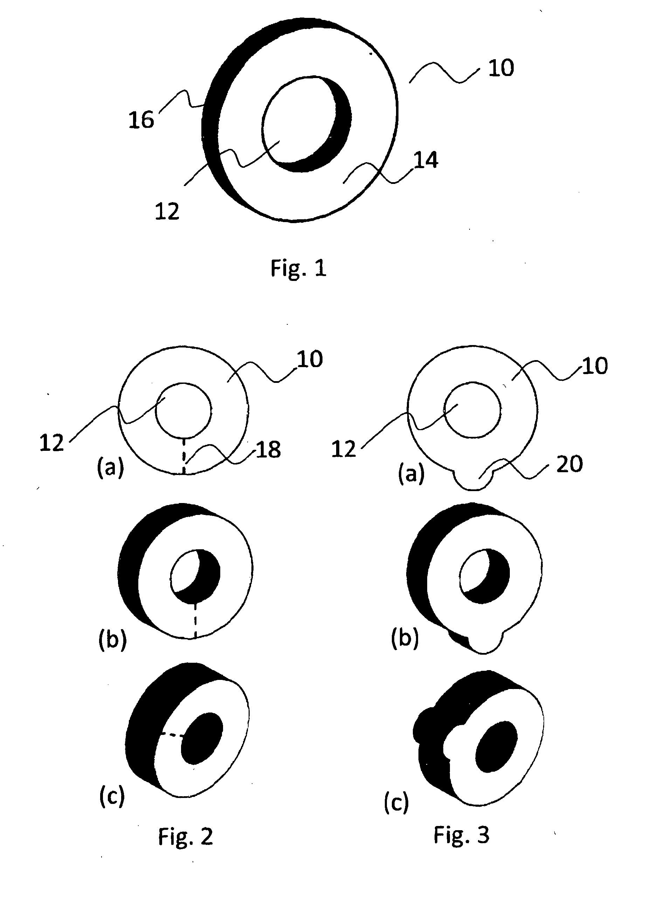

Figure 1 illustrates a first embodiment not part of the invention. A marker device comprises a disc-shaped structure 10 made from foam. The disc 10 has a central aperture 12 extending therethrough.

The disc 10 is constructed with a desired thickness which is generally relative to the size of the fixing with which it is to be used.

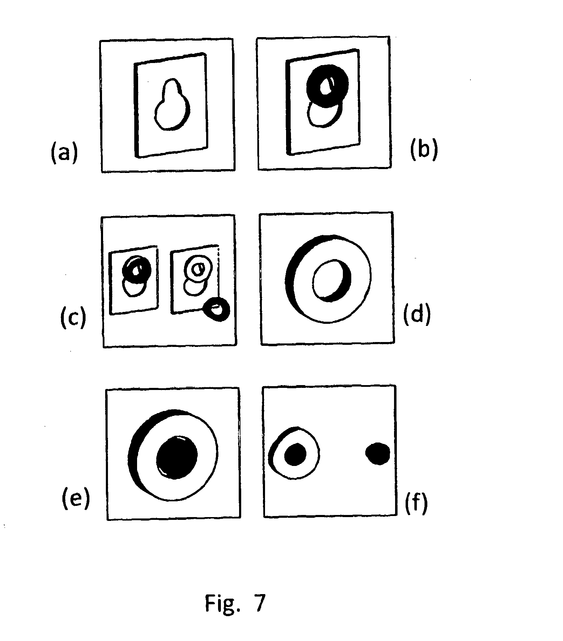

A first side 14 of the disc 10 is coated with a mild adhesive which covers the entire surface area of that side 14. A releasable backing film (shown in Figure 7) is then provided over the surface. The backing film may be coloured to indicate to the user that this is the side carrying the milder adhesive.

A second side 16 of the disc 10 is coated with a weak adhesive, or at least an adhesive weaker than that coating the first side 14. The adhesive is applied as a number of spots, or may be applied in a thin ring around the edge of the second side 16. Alternatively, provided the adhesive is significantly weaker than the mild adhesive, the adhesive may be applied to the entire surface area of the second side 16. A releasable backing film (not shown), of a different colour to the first side is then provided over the second surface 16.

Figures 2(a) to (c) illustrate a second embodiment not part of the invention. In this embodiment, the disc 10 has radial perforations 18, extending from the aperture 12 to the outer edge of the disc 10. The perforations 18 facilitate removal of the disc 10 once the screw for hanging the article is in place. The disc 10 is removed simply by the user breaking the perforations.

The perforations 18 provide a line of weakness to the structure, thereby allowing the disc 10 to be made from other materials less frangible than foam.

Figures 3(a) to (c) illustrate a third embodiment not part of the invention. In this embodiment, the disc 10 includes a tab 20 extending from the outer edge of the disc 10. The tab 20 facilitates removal of the disc 10 once the screw for hanging the article is in place. The disc 10 is removed simply by the user pulling the tab 20 to break the disc structure.

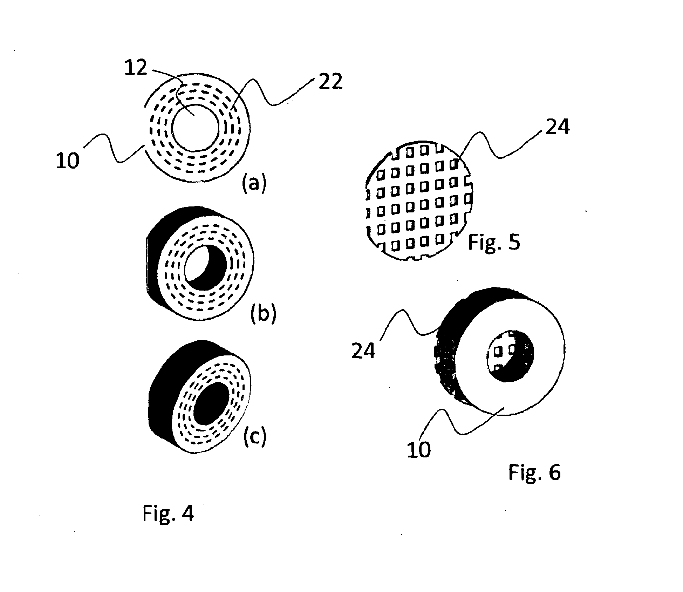

Figures 4(a) to (c) illustrate an embodiment of the invention. In this embodiment, the disc 10 has three sets of concentric perforations 22 of increasing radii extending around the aperture 12. This allows the size of the aperture 12 to be varied to accommodate the size of the drill bit required. To vary the size of the aperture 12 the user simply removes the central section by the desired amount. It will be appreciated that the concentric perforations 22 can be used in conjunction with any of the embodiments previously described.

Figure 5 shows a layer of gauze or gauze-like material 24 which can be used in conjunction with any of the embodiments. The gauze layer 24 essentially consists of a circular layer formed with an array of apertures. As can be seen in Figure 6, the gauze layer 24 is adhered to the first side 14 of the disc 10 in such a way that the gauze material extends over the aperture 12. The depth of the disc 10 may be adjusted slightly to accommodate the gauze layer 24 and to ensure that the overall depth remains accurate.

In an alternative arrangement the disc 10 and gauze layer 24 are formed as a single piece.

The purpose of the gauze layer 24 is to provide a non-slip surface for the drill bit when drilling into reflective, shiny or slippery materials such as tiles, metal or glass. The gauze layer 24 provides optimum grip for the drill bit whilst also maintaining a visible surface to locate the desired position of drilling accurately. Moreover, the gauze layer 24 provides extra grip for highly polished surfaces where the disc adhesion may weaken during the drilling process.

It is clearly envisaged that the gauze layer 24 can be used in conjunction with any of the embodiments previously described.

Figures 7(a) to (f) illustrate how the basic product is used. It will be appreciated that the method of use is applicable to any of the embodiments described.

The backing film is removed from the second side 16 of the disc 10 and this side is placed over the fixing hole, fixing plate or other mounting method on the rear of the object to be hung, with the aperture 12 aligned with the hole in the fixing. The back film of the first side 14 of the disc 10 is then removed and the object is placed in its desired position against the wall. Once in place the object is pushed flush against the wall. The object is then pulled away from the wall leaving the disc 10 adhered to the wall (due to the difference in adhesion between the first and second sides).

The aperture 12 of the disc 10 is then able to act as a locator for a drill bit. With the disc 10 still on the wall, a hole is drilled and a screw threaded into the hole. The depth of the disc 10 is used as a guide for threading the screw into the hole. During insertion the screw head is levelled to the depth of the disc 10. The disc 10 is then removed, aided by the features described leaving the screw protruding from the surface at an optimum length to hang the article.

## Claims

1. A marker device (10) having a central aperture (12) and first and second sides (14, 16) carrying an adhesive, the first side (14) carrying more, or stronger, adhesive than the second (16), the marker (10) including means to facilitate removal, of the marker (10) from a wall to which the first side (12) is attached during use, **characterised in that** the marker (10) includes at least one concentric line of weakness (22) extending around the aperture (12), which line can be broken to increase the size of the aperture (12) of the marker (10).

2. A marker device (10) according to claim 1, wherein the marker (10) is disc-shaped.

3. A marker device (10) according to claim 1 or claim 2, wherein the marker (10) is made from a foam or foam-like material.

4. A marker device (10) according to any one of claims 1 to 3, wherein the removal means comprises a further line of weakness (18) extending radially from the aperture (12) to the outer edge of the marker.

5. A marker device (10) according to any one of claims 1 to 3, wherein the removal means comprises a tab (20) protruding from the edge of the marker (10) which can be gripped by the user to pull the marker (10) apart.

6. A marker device (10) according to claim 1, wherein the marker (10) has at least three concentric lines of weakness (22) of increasing radii.

7. A marker device (10) according to any preceding claim wherein the first side (14) of the marker (10) has a layer of gauze or gauze-like material (24) extending across the aperture.

## Patentansprüche

1. Markierungsvorrichtung (10) mit einer zentralen Öffnung (12) und einer ersten und einer zweiten Seite (14, 16), die einen Klebstoff tragen, wobei die erste Seite (14) mehr oder einen stärkeren Klebstoff als die zweite (16) trägt, wobei die Markierung (10) ein Mittel zum Erleichtern der Entfernung der Markierung (10) von einer Wand aufweist, an die die erste Seite (14) im Gebrauch angebracht wird, **dadurch gekennzeichnet, dass** die Markierung (10) mindestens eine konzentrische Perforationslinie (22) aufweist, die sich um die Öffnung (12) herum erstreckt, wobei diese Linie gebrochen werden kann, um die Größe der Öffnung (12) der Markierung (10) zu vergrößern.

2. Markierungsvorrichtung (10) nach Anspruch 1, wobei die Markierung (10) scheibenförmig ist.

3. Markierungsvorrichtung (10) nach Anspruch 1 oder Anspruch 2, wobei die Markierung (10) aus einem Schaumstoff oder schaumstoffartigen Material hergestellt ist.

4. Markierungsvorrichtung (10) nach einem der Ansprüche 1 bis 3, wobei das Entfernungsmittel eine weitere Perforationslinie (18) umfasst, die sich radial von der Öffnung (12) zu der Außenkante der Markierung erstreckt.

5. Markierungsvorrichtung (10) nach einem der Ansprüche 1 bis 3, wobei das Entfernungsmittel eine Lasche (20) umfasst, die von der Kante der Markierung (10) hervorsteht und die von dem Benutzer erfasst werden kann, um die Markierung (10) auseinanderzuziehen.

6. Markierungsvorrichtung (10) nach Anspruch 1, wobei die Markierung (10) über mindestens drei konzentrische Perforationslinien (22) mit zunehmenden Radien verfügt.

7. Markierungsvorrichtung (10) nach einem vorhergehenden Anspruch, wobei die erste Seite (14) der Markierung (10) über eine Schicht aus Gaze oder einem gazeartigen Material (24) verfügt, die sich. über die Öffnung hinweg erstreckt.

## Revendications

1. Dispositif de marqueur (10) ayant une ouverture centrale (12) et des premier et second côtés (14, 16) portant un adhésif, le premier côté (14) portant davantage d'adhésif ou de l'adhésif plus fort que le second (16), le marqueur (10) incluant un moyen pour faciliter le retrait du marqueur (10) d'un mur auquel le premier côté (14) est relié en cours d'utilisation, **caractérisé en ce que** le marqueur (10) inclut au moins une ligne de perforation concentrique (22) s'étendant autour de l'ouverture (12), laquelle ligne peut être cassée pour augmenter la taille de l'ouverture (12) du marqueur (10).

2. Dispositif de marqueur (10) selon la revendication 1, dans lequel le marqueur (10) est en forme de disque.

3. Dispositif de marqueur (10) selon la revendication 1 ou la revendication 2, dans lequel le marqueur (10) est réalisé en une mousse ou un matériau de type mousse.

4. Dispositif de marqueur (10) selon l'une quelconque des revendications 1 à 3, dans lequel le moyen de retrait comprend une autre ligne de perforation (18) s'étendant radialement de l'ouverture (12) au bord externe du marqueur.

5. Dispositif de marqueur (10) selon l'une quelconque des revendications 1 à 3, dans lequel le moyen de retrait comprend une languette (20) faisant saillie depuis le bord du marqueur (10) qui peut être saisie par l'utilisateur pour démonter le marqueur (10).

6. Dispositif de marqueur (10) selon la revendication 1, dans lequel le marqueur (10) a au moins trois lignes de perforation concentriques (22) de rayons croissants.

7. Dispositif de marqueur (10) selon l'une quelconque des revendications précédentes, dans lequel le premier côté (14) du marqueur (10) a une couche de gaze ou de matériau de type gaze (24) s'étendant en travers de l'ouverture.
